# EUROPEAN PATENT APPLICATION

(11) **EP 4 425 353 A2**
(43) Date of publication of application: **04.09.2024**
(21) Application number: 22901924.5
(22) Date of filing: 04.11.2022
(51) Int. Cl.: G06F 18/214, G06N 3/08, G06N 3/04, G06F 18/25

(54) **GRAPH NEURAL NETWORK GENERATION METHOD, APPARATUS AND SYSTEM, MEDIUM AND ELECTRONIC DEVICE**

(30) Priority: 02.12.2021 CN 202111474450
(71) Applicant: Lemon Inc., Grand Cayman, KY1-1205 (KY)
(72) Inventor: ZHU, Yibo, Los Angeles, California 90066 (US); CHEN, Yangrui, Beijing 100086 (CN); HE, Jun, Los Angeles, California 90066 (US); PENG, Yanghua, Los Angeles, California 90066 (US); GUO, Chuanxiong, Los Angeles, California 90066 (US); WANG, Jian, Beijing 100086 (CN)
(74) Representative: Dentons UK and Middle East LLP
(86) International application number: PCT/SG2022/050798
(87) International publication number: WO 2023/101598

(57) **Abstract**

The disclosure relates to a method, apparatus, system, medium and electronic device for graph neural network generation. The method includes: obtaining a subgraph structure, the subgraph structure being configured to reflect a graph structure of a corresponding subgraph, and the subgraph comprising a plurality of nodes and edges between the plurality of nodes; obtaining, based on the subgraph structure and according to a predetermined priority, node features of the plurality of nodes and edge features of the edges from a plurality of memories; the predetermined priority being obtained by sorting the plurality of memories in accordance with memory size in an ascending order; fusing, based on the subgraph structure, the node features of the plurality of nodes and the edge features of the edges to obtain subgraph data; and training, based on the subgraph data, the graph neural network. The method for graph neural network generation of the present disclosure may improve the efficiency of graph neural network training.

## Description

### CROSS REFERENCE

This application claims the priority of the Chinese patent application with application number 202111474450.0, filed on December 2, 2021, entitled "METHOD, APPARATUS, SYSTEM, MEDIUM AND ELECTRONIC DEVICE FOR GENERATING GRAPH NEURAL NETWORK", the entirety of which is incorporated herein by reference.

### FIELD

The present disclosure relates to a field of artificial intelligence, and in particular to a method, apparatus, system, medium and electronic device for generating a graph neural network.

### BACKGROUND

In recent years, graph neural networks have been increasingly widely used in various fields, such as computer vision, natural language processing and other fields. For example, graph neural networks can be applied to text sentiment analysis, question answering systems, etc. The graph neural network is a kind of neural network that directly acts on a graph. The graph is composed of nodes and edges.

For large-scale graphs (for example, graphs with hundreds of millions of nodes), due to their complex structures, traditional machine learning architectures are not suitable for training graph neural networks. Therefore, how to train graph neural networks more efficiently becomes a problem urgent to be solved

### SUMMARY

This section is provided to introduce in brief form the concepts that are described in detail in the detailed description section that follows. This section is not intended to identify key features or essential features of the claimed technical solution, nor is it intended to be used to limit the scope of the claimed technical solution.

In a first aspect, the present disclosure provides a method for graph neural network generation, which includes:
obtaining a subgraph structure, the subgraph structure being configured to reflect a graph structure of a corresponding subgraph, and the subgraph comprising a plurality of nodes and edges between the plurality of nodes;
obtaining, based on the subgraph structure and according to a predetermined priority, node features of the plurality of nodes and edge features of the edges from a plurality of memories; the predetermined priority being obtained by sorting the plurality of memories in accordance with memory size in an ascending order;
fusing, based on the subgraph structure, the node features of the plurality of nodes and the edge features of the edges to obtain subgraph data; and
training, based on the subgraph data, the graph neural network.

In a second aspect, the present disclosure provides an apparatus for graph neural network generation, which includes:
a first obtaining module configured to obtain a subgraph structure, the subgraph structure being configured to reflect a graph structure of a corresponding subgraph, and the subgraph comprising a plurality of nodes and edges between the plurality of nodes;
a second obtaining module configured to obtain, based on the subgraph structure and according to a predetermined priority, node features of the plurality of nodes and edge features of the edges from a plurality of memories; the predetermined priority being obtained by sorting the plurality of memories in accordance with memory size in an ascending order;
a fusing module configured to fuse, based on the subgraph structure, the node features of the plurality of nodes and the edge features of the edges to obtain subgraph data; and
a training module configured to train, based on the subgraph data, the graph neural network.

In a third aspect, the present disclosure provides a system for graph neural network generation. The system includes: a graph segmenting apparatus and a plurality of model training apparatuses. The graph segmenting apparatus is used to obtain a plurality of subgraph structures and load the plurality of the subgraph structures into the second graph storage server memory; each of the plurality of model training apparatuses is used to train the graph neural network.

In a fourth aspect, the present disclosure provides a computer readable medium having a computer program stored thereon, when executed by a processing device, the program performing steps of the method described in the first aspect.

In a fifth aspect, the present disclosure provides an electronic device, including:
a storage device having stored thereon one or more computer programs; and
one or more processing devices configured to execute the one or more computer programs in the storage device to implement steps of the method described in the first aspect.

Through the above technical solution, node features and edge features are obtained from a plurality of memories according to the predetermined priority. Since the predetermined priority is obtained by sorting a plurality of memories in accordance with memory size from small to large, the smaller the memory size, the faster the data reading rate. Therefore, through this predetermined priority, the node features and the edge features can be obtained preferentially from the memory with a fast reading rate, thereby improving the efficiency of obtaining subgraph data and further improving the training efficiency of the graph neural network.

Other features and advantages of the present disclosure will be detailed in the DETAILED DESCRIPTION section that follows.

### BRIEF DESCRIPTION OF THE DRAWINGS

The above and other features, advantages and aspects of various embodiments of the present disclosure will become more apparent with reference to the following embodiments in conjunction with the accompanying drawings. Throughout the drawings, the same or similar reference numbers refer to the same or similar elements. It is to be understood that the drawings are schematic and that components and elements are not necessarily drawn to scale. In the drawings:
FIG. 1 is a system architecture diagram of a system for generating a graph neural network illustrated according to an example embodiment.
FIG. 2 is a flow chart of a method for generating a graph neural network illustrated according to an example embodiment.
FIG. 3 is a flowchart of obtaining node features and edge features illustrated according to an example embodiment.
FIG. 4 is a flowchart of obtaining a plurality of subgraph structures illustrated according to an example embodiment.
FIG. 5 is a block diagram of an apparatus for generating a graph neural network illustrated according to an example embodiment.
FIG. 6 is a schematic structural diagram of an electronic device illustrated according to an example embodiment.

### DETAILED DESCRIPTION

Embodiments of the present disclosure will be described in more detail below with reference to the accompanying drawings. Although certain embodiments of the disclosure are shown in the drawings, it should be understood that the present disclosure may be implemented in various forms and should not be construed as limited to the embodiments set forth herein, but rather these embodiments are provided for thoroughly and fully understand the present disclosure. It should be understood that the drawings and embodiments of the present disclosure are provided for illustrative purposes only but not intended to limit the scope of the present disclosure.

It should be understood that various steps described in the method implementations of the present disclosure may be executed in different orders and/or in parallel. Furthermore, the method implementations may include additional steps and/or the illustrated steps may be omitted. The scope of the present disclosure is not limited in this regard.

The term "including" and its variations as used herein are non-exclusive inclusion, i.e. "including but not limited to". The term "based on" means "at least partially based on". The term "one embodiment" means "at least one embodiment"; the term "another embodiment" means "at least one additional embodiment"; and the term "some embodiments" means "at least some embodiments". Relevant definitions of other terms will be given in the following description.

It should be noted that the concepts of "first" and "second" mentioned in this disclosure are only used to distinguish different apparatuses, modules, or units, but are not used to limit the order or interdependence of the functions performed by these apparatuses, modules, or units.

It should be noted that the modifications of "one" and "a plurality of' mentioned in this disclosure are illustrative but not limiting. Those skilled in the art should understand that unless otherwise indicated in the context, they should be understood as "one or more".

The names of the messages or information interacted between a plurality of apparatuses in this public implementation are for illustrative purposes only, which are not intended to limit the scope of these messages or information.

Large-scale graph neural network training has unique technical challenges compared with traditional neural network training. Therefore, traditional distributed machine learning architecture is not suitable for graph neural network training. In a distributed scenario, graph neural network training needs a separate sampler to generate training data, thus hitting a bottleneck in computing and transmission bandwidth.

To this end, the applicant proposes a system for generating a graph neural network. The system includes a plurality of model training apparatuses 110 and a graph segmenting apparatus 120. In some embodiments, the model training apparatuses 110 and the graph segmenting apparatus 120 may be computing devices, such as, laptops, desktop computers, servers, etc. In some embodiments, the graph segmenting apparatus 120 may segment a full graph into a plurality of graph slices to obtain a plurality of subgraph structures, and load the plurality of subgraph structures into a memory of the second graph storage server 130. In some embodiments, the second graph storage server 130 may be a distributed graph storage server.

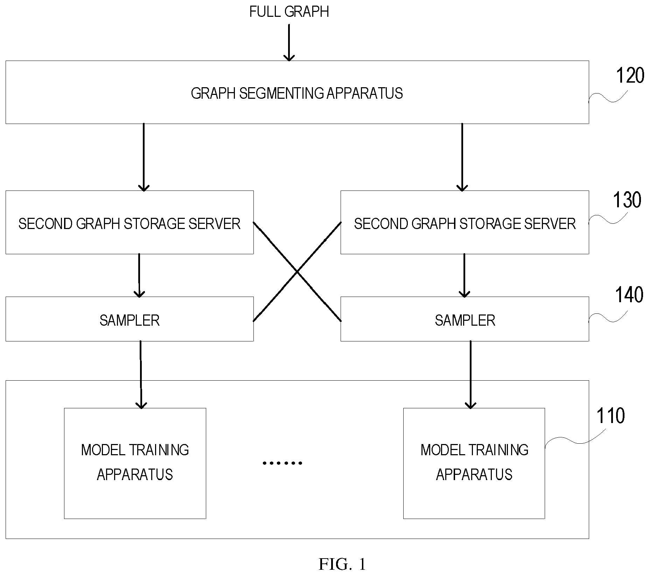

In some embodiments, each model training apparatus of the plurality of model training apparatuses 110 may obtain a subgraph structure from the memory of the second graph storage server 130 through a sampler 140, so that the model training apparatus take subgraph data corresponding to the subgraph structure as training data for training the graph neural network. In some embodiments, each model training apparatus 110 may include a graphics processing unit memory and a central processing unit, and each model training apparatus 110 is communicatively connected to the first graph storage server (not shown in FIG. 1), so that any one of the model training apparatuses 110 may obtain node features and edge features from a plurality of memories.

The technical solutions disclosed in the present disclosure will be described in detail below with reference to the drawings.

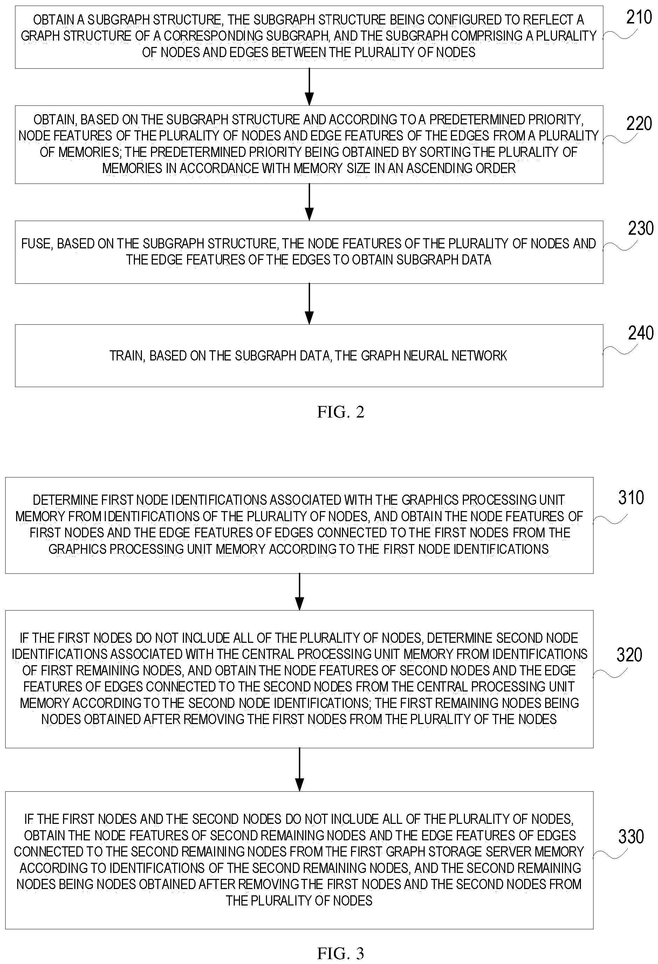

FIG. 2 is a flowchart of a method for generating a graph neural network according to an example embodiment, the method may be applied to a model training apparatus, for example, any one of the plurality of model training apparatuses shown in FIG. 1. In some embodiments, the training method may also be applied to a graphics processing unit of any model training apparatus. As shown in FIG. 2, the method may include the following steps.

At step 210: obtain a subgraph structure, the subgraph structure being configured to reflect a graph structure of a corresponding subgraph, and the subgraph includies a plurality of nodes and edges between the plurality of nodes.

In some embodiments, the subgraph may be partial graph data in a full graph, and the full graph may be training data used to obtain a trained graph neural network. In some embodiments, the full graph can be a large-scale graph, for example, a graph composed of hundreds of millions of nodes and the edges between nodes. In some embodiments, the subgraph structure is configured to reflect a graph structure of the corresponding subgraph. It can be understood that based on the subgraph structure, the model training apparatus may determine the nodes and edges included in subgraph data required for training the graph neural network, so as to obtain the node features and edge features based on the nodes and edges. For specific details about training the graph neural network by the model training apparatus, please refer to the following step 240 and its related description, which will not be repeated here.

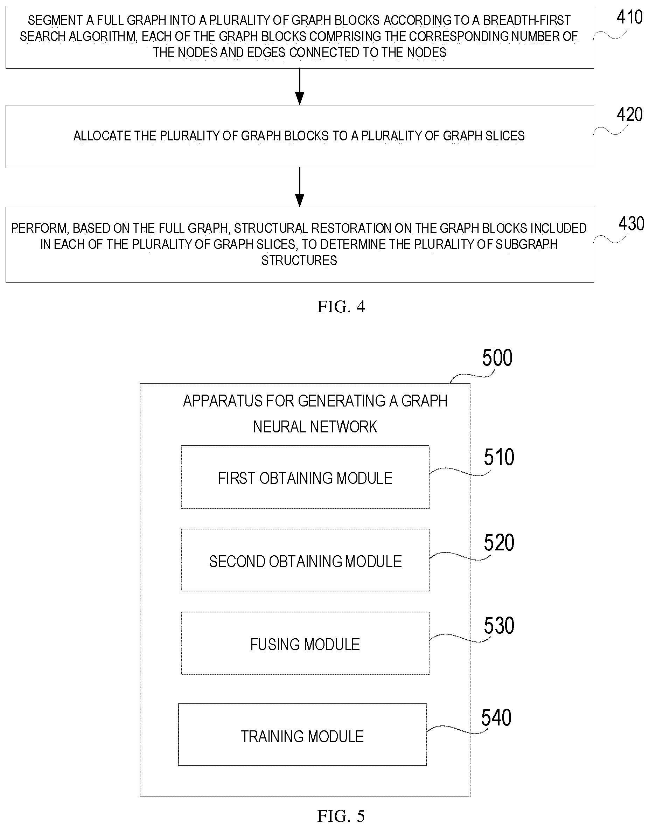

In some embodiments, the model training apparatus may obtain one or more subgraph structures (e.g., 3 or 5 subgraph structures). In some embodiments, the model training apparatus may obtain a subgraph structure from a second graph storage server memory based on a sampler (for example, one or more samplers); the second graph storage server memory stores a plurality of subgraph structures therein. In some embodiments, the second graph storage server memory may be a distributed graph storage server memory. In some embodiments, the plurality of subgraph structures stored in the second graph storage server memory may be obtained by processing the full graph by a graph segmenting apparatus (for example, the graph segmenting apparatus shown in FIG. 1). For specific details of obtaining a plurality of subgraph structures, please refer to the following FIG. 4 and its related description, which will not be repeated here.

At step 220: obtain, based on the subgraph structure, node features of the plurality of nodes and edge features of the edges from a plurality of memories according to a predetermined priority; the predetermined priority is obtained by sorting the plurality of memories according to memory size in an ascending order.

In some embodiments, the plurality of memories may include a graphics processing unit (GPU) memory, a central processing unit (CPU) memory, and a first graph storage server memory. In some embodiments, the first graph storage server memory may be a remote graph storage server memory, and the remote graph storage server may be run on the cloud platform. For example, the cloud platform may include one of a private cloud, a public cloud, a hybrid cloud, a community cloud, a distributed cloud, an internal cloud, etc. or any combination thereof.

In some embodiments, the model training apparatus may have a CPU and a GPU. The model training apparatus may include a plurality of GPU memories. The plurality of GPU memories are respectively the GPU memories of a plurality of model training apparatuses. In some embodiments, the CPUs of the plurality of model training apparatuses may share one memory, correspondingly, the model training apparatus may have one CPU memory.

In some embodiments, the node features and edge features of the subgraph structure are pre-extracted and cached into the plurality of memories. For example, the node features and edge features of the subgraph structure may be pre-extracted from a full graph and cached into the plurality of memories. In some embodiments, the node features and edge features included in the same or different subgraph structures may be cached into different memories. It is worth noting that the computing apparatus for extracting and caching the node features and edge features may be any computing apparatus, such as the model training apparatus, the graph segmenting apparatus, or other computing apparatus, which is not limited in this disclosure.

In some embodiments, the node features of the nodes included in the full graph and the edge features of the edges may be cached into the plurality of memories in advance according to a predetermined rule. For example, in some embodiments, hash calculation may be performed based on the node identifications of the nodes included in the full graph (such as node IDs) to obtain hash values, and the node features of corresponding nodes and the edge features of edges connected to the corresponding nodes may be cached into respective GPU memories based on the hash values. In some embodiments, the node features of the corresponding nodes and the edge features of the edges connected to the corresponding nodes may be cached into respective GPU memories through a plurality of threads. By caching the node features and edge features into different GPU memories according to the hash values, the model training apparatus may obtain corresponding node features and edge features from different CPU memories, which improves the efficiency in searching and obtaining node features and edge features, thereby improving the efficiency of training graph neural networks.

In some embodiments, due to the limited memory size of GPU memory, for large-scale full graphs, the node features and the edge features of the full graph may not all be cached into the plurality of GPU memories. For node features of the nodes and the edge features of the edges connected to the nodes that are not cached into the GPU memories, the node features of the corresponding nodes and the edge features of the edges connected to the corresponding nodes can be cached into the CPU memory according to degrees of the nodes in descending order. In some embodiments, a degree of a node can be determined based on the edges connected to the node. The more edges the node is connected, the higher the degree of the node is. For example, if a node is connected to 3 edges, it is a 3-degree node. For example, if a node is connected to 5 edges, it is a 5-degree node. By caching node features and edge features into the CPU memory, the large memory on the machine of the model training apparatus is utilized, and the number of times for obtaining node features and edge features from the graph storage server memory is reduced.

In some embodiments, due to the limited memory size of the CPU memory, the CPU memory cannot cache the node features of all nodes and the edge features of all edges connected to the nodes that are not cached in the GPU memory. Furthermore, the node features of nodes and the edge features of the edges connected to the nodes that are not cached in the GPU memory are cached into the first graph storage server memory. In some embodiments, the node features of all nodes in the full graph and the edge features corresponding to the all nodes may also be cached into the first graph storage server memory.

In some embodiments, memory sizes of the GPU memory, the CPU memory, and the first graph storage server memory are provided from small to large. The larger the memory size of the memory is, the slower the rate of reading data from the memory is. Therefore, the rates of reading the corresponding node features and edge features from the GPU memory, the CPU memory, and the first graph storage server memory are from fast to slow.

The embodiments of the present disclosure may preferentially obtain node features and edge features from the memory with a fast read rate according to predetermined priorities. If all node features and all edge features in the subgraph structure can be obtained from a memory with a fast read rate, the model training apparatus will no longer obtain node features and edge features from memories with slower reading rates, thereby improving the efficiency in obtaining subgraph data and further improving the efficiency in training graph neural networks. At the same time, due to the huge overhead of transmiting features in generating (or training) graph neural networks, the overhead of transmiting feature data can be reduced by pre-caching node features and edge features into respective memories and obtaining node features and edge features from different memories. The method for generating a graph neural network of the present disclosure has low overhead in feature transmission, and thus overcoming the feature transmission bottleneck in the process of generating graph neural networks. For specific details about obtaining node features and edge features from a plurality of memories, please refer to FIG. 3 below and the related descriptions thereof, which will not be repeated here.

At step 230: fuse the node features of a plurality of nodes and the edge features of edges based on the subgraph structure to obtain subgraph data.

In some embodiments, the model training apparatus may use different threads to obtain corresponding node features and edge features from different memories according to a predetermined node order. Since a node order corresponding to the node features and edge features transmitted back by different threads may be inconsistent with the predetermined node order, the model training apparatus fuses the node features of the plurality of nodes and the edge features of the edges based on the subgraph structure to obtain subgraph data that matches the subgraph structure.

As mentioned above, the method for generating a graph neural network of the present disclosure may be applied to a graphics processing unit of the model training apparatus. In some embodiments, the graphics processing unit (i.e. GPU) of the model training apparatus may be an graphics processing unit with a high-speed interconnection function. In some embodiments, the graphics processing unit of the model training apparatus may fuse the node features of a plurality of nodes and the edge features of edges based on the subgraph structure to obtain subgraph data. Through high-speed interconnection between graphics processing units, the obtained node features and edge features are fused to achieve high-speed transmission, and the fusion efficiency is improved.

At step 240: train the graph neural network based on the subgraph data.

In some embodiments, any one of the model training apparatuses may be provided with a graph neural network. In some embodiments, any one of the model training apparatuses may process the subgraph data according to the graph neural network to obtain a gradient slice. A gradient for training the graph neural network can be obtained through the gradient slices of the plurality of model training apparatuses.

In some embodiments, the gradient for training the graph neural network can be obtained in various ways based on gradient slices of the plurality of model training apparatuses. For example, one of the plurality of model training apparatuses can be used as a primary model training apparatus. The primary model training apparatus receives gradient slices from other model training apparatuses, obtains the gradient by averaging the gradient slices, and then transmits the gradient to other model training apparatuses. As another example, a parameter server can be added, and the gradient slices of the plurality of model training apparatuses may be received by the parameter server, and the gradient can be obtained by averaging the gradient slices, and then the obtained gradient is transmitted to other model training apparatuses.

In some embodiments, the model training apparatus may update a model parameter of the graph neural network based on the gradient. In some embodiments, the above-mentioned steps 210 to 240 may refer to one update among a plurality of iterative updates for model parameter. In some embodiments, when the iterative updates satisfy a predetermined stop condition, the iteration can be stopped and the trained graph neural network can be obtained. The predetermined stop condition may be set specifically according to the actual situation. For example, the predetermined stop condition is that the number of iterations reaches a predetermined threshold. For another example, the predetermined stop condition is that the difference between the model parameter obtained in the current iteration and the model parameter obtained in the previous iteration falls in a predetermined range. It is worth noting that the way in which the model training apparatus trains the graph neural network is not limited in the present disclosure.

As mentioned above, the above-mentioned steps 210 to 240 may be one update among a plurality of iterative updates for model parameter. In some embodiments, in each iterative update, the model training apparatus may obtain a subgraph structure from a second graph storage server memory based on a sampler according to a breadth-first search algorithm, so as to obtain the corresponding subgraph data. Through the breadth-first search algorithm, the subgraph data processed by the model training apparatus is in a predetermined area in the full graph during the current iterative update and the next iterative update. For example, the subgraph data processed in the two iterative updates is in a lower half area or a upper half area of the full graph. Thus, data reuse of the full graph is improved, thereby ensuring the randomness of the training data (i.e., subgraph data), and improving the cache hit rate at the same time.

FIG. 3 is a flowchart of obtaining node features and edge features illustrated according to an example embodiment. As shown in FIG. 3, the process may include the following steps.

At step 310: determine first node identifications associated with the graphics processing unit memory from identifications of the plurality of nodes, and obtain the node features of first nodes and the edge features of edges connected to the first nodes from the graphics processing unit memory according to the first node identifications.

At step 320: if the first nodes do not include all of the plurality of nodes, determine second node identifications associated with the central processing unit memory from identifications of first remaining nodes, and obtain the node features of second nodes and the edge features of edges connected to the second nodes from the central processing unit memory according to the second node identifications; the first remaining nodes are nodes obtained after removing the first nodes from the plurality of the nodes.

At step 330: if the first nodes and the second nodes do not include all of the plurality of nodes, obtain the node features of second remaining nodes and the edge features of edges connected to the second remaining nodes from the first graph storage server memory according to identifications of the second remaining nodes, and the second remaining nodes are nodes obtained after removing the first nodes and the second nodes from the plurality of nodes.

In some embodiments, the first node identifications associated with the graphics processing unit memory may be identifications of nodes in the plurality of nodes cached in the graphics processing unit memory. Similarly, the second node identifications associated with the CPU memory may be identifications of nodes in first remaining nodes that are cached in the CPU memory. For specific details on the way in which the graphics processing unit memory, the CPU memory and the second graph storage memory cache node features and edge features, please refer to the above step 220 and its related descriptions, which will not be repeated here.

In some embodiments, an identification of a node may refer to a node ID. In some embodiments, whether a node is cached in respective graphics processing unit memories or in the central processing unit memory may be queried through the node ID. For example, the IDs of a plurality of nodes can be used to query whether respective nodes are cached in respective graphics processing unit memories through IDs of the plurality of nodes, so as to determine first node identifications associated with the respective graphics processing unit memories from the identifications of the plurality of nodes. Similarly, the second node identifications associated with the central processing unit memory is determined similarly, which will not be repeated herein.

In some embodiments, the plurality of memories include a plurality of the graphics processing unit memories; obtaining the node features of first nodes and the edge features of edges connected to the first nodes from the graphics processing unit memory according to the first node identifications includes:

determining the first node identifications associated with each graphics processing unit memory in the plurality of graphics processing unit memories, and obtaining the node features of respective first nodes and the edge features of edges connected to the first nodes from the each graphics processing unit memories in the plurality of graphics processing unit memories using a plurality of threads through a thread queue. The corresponding node features and edge features are obtained from different graphics processing unit memories through the plurality of threads, and thus the search speed may be improved through such slice design. The thread queue can prevent the read operation and write operation from being simultaneously performed on the graphics processing unit memory, and thus avoids the overhead caused by the graphics processing unit memory caching the write operations of node features and edge features through a plurality of threads, which greatly increasing the cache performance.

In some embodiments, the node features and the edge features can be specifically determined according to the application scenarios of the graph neural networks, and the application scenarios of the graph neural networks are specifically set according to actual needs. For example, the graph neural networks can be applied to text sentiment analysis. The text sentiment analysis can be used to determine sentiment of the text to be analyzed towards the entity to be analyzed. The sentiment can include positive sentiment, negative sentiment, neutral sentiment, etc. Correspondingly, the text and the entity can be determined as node features. The entity may be specifically set according to actual needs. For example, the entity may be a service, a place name, etc. Sentiment of a text toward a entity is determined as an edge feature for construct full graph data. Based on the full graph data, a graph neural network is obtained by training. It is worth noting that graph neural networks can also be applied to other scenarios, such as question and answer systems, language segmentation, etc., which will not be repeated here.

FIG. 4 is a flowchart illustrating obtaining a plurality of subgraph structures according to an example embodiment, and is applied to a graph segmenting apparatus (for example, the graph segmenting apparatus shown in FIG. 1). As shown in FIG. 4, the flow may include the following steps.

At step 410: segment a full graph into a plurality of graph blocks according to a breadth-first search algorithm, each of the graph blocks comprising the corresponding number of the nodes and edges connected to the nodes.

In some embodiments, the number of nodes in each graph block may be set according to the actual situation, for example, 10 or 20 nodes. In some embodiments, the breadth-first search algorithm may segment the full graph into a plurality of graph blocks by traversing all nodes layer by layer. The nodes included in each graph block segmented by the breadth-first search algorithm have connection relationships.

At step 420: allocate the plurality of graph blocks to a plurality of graph slices.

In some embodiments, the plurality of graph blocks may be allocated to the plurality of graph slices in various manners. In some embodiments, the plurality of graph blocks may be randomly allocated to the plurality of graph slices. In some embodiments, allocating the plurality of graph blocks to the plurality of graph slices may include: allocating the plurality of graph blocks to the plurality of graph slices in accordance with a predetermined order; and exchanging information of respective picture slices of the plurality of graph slices, and adjusting the graph blocks having association relationship into a same graph slice, to obtain a plurality of adjusted graph slices.

In some embodiments, the plurality of graph blocks may be allocated to graph slices sequentially in a predetermined order. For example, a graph block 1 is allocated to a graph slice 1, a graph block 2 is allocated to a graph slice 2, and so on. In some embodiments, exchanging information of respective picture slices of the plurality of graph slices may refer to exchanging node information and edge information in the graph blocks. In some embodiments, the graph blocks with association relationships may be specifically determined in accordance with a predetermined rule. For example, nodes included in each of any two graph blocks have neighbor relationships. For another example, the predetermined number of nodes included in each of any two graph blocks have neighbor relationships. This disclosure does not impose any restrictions on this.

The embodiments of the present disclosure adjust the graph blocks with association relationships into the same graph slice, that is, the nodes and edges with association relationships are divided into one graph slice. It can balance the load of each graph slice and the edges across the graph slices, so that when the sampler obtains the subgraph structure from the memory of the distributed graph storage server, it does not need to cross machines (or loads) to obtain subgraph information, reducing frequent cross-machine communication during the sampling process, and improving the sampling speed of the sampler. At the same time, by adjusting the graph blocks with association relationships to the same graph slice, it is possible to have approximately the same number of nodes in each graph slice, achieving load balancing and evenly distributing the training nodes in the full graph throughout each graph slice.

In some embodiments, before before allocating the plurality of graph blocks to the plurality of graph slices, the method further includes: fusing a first target graph block having a node number less than a first predetermined threshold with other graph blocks to obtain a plurality of fused graph blocks, the other graph blocks being graph blocks obtained after removing the first target graph block from the plurality of graph blocks. In some embodiments, the first predetermined threshold may be set specifically according to the actual situation, for example, 5 nodes. In some embodiments, the first target graph block may be randomly fused with other graph blocks.

In some embodiments, before allocating the plurality of graph blocks to the plurality of graph slices, the method further includes: determining, from the plurality of graph blocks, a second target graph block having a node number less than a second predetermined threshold, and a third target graph block having a node number greater than a third predetermined threshold; the third predetermined threshold being greater than the second predetermined threshold; and if the second target graph block and the third target graph block have association relationship with each other, fusing the second target graph block with the third target graph block to obtain a plurality of fused graph blocks. In some embodiments, the second predetermined threshold and the third predetermined threshold may be specifically set according to actual conditions. In some embodiments, the second predetermined threshold may be a smaller value, for example, 50 or 80, etc. The third predetermined threshold may be a larger value, for example, 1000, etc. For specific details about the association relationship, please refer to the above relevant descriptions and will not be repeated here.

The embodiments of the present disclosure fuse small free graph blocks with other graph blocks by fusing the first target graph block with the number of nodes smaller than the first predetermined threshold with other graph blocks. By fusing the second target graph block with the third target graph block, a plurality of fused graph blocks are obtained. Small graph blocks with association relationships may be fused with large graph blocks. That is, small blocks attached to large blocks may be fused. Both of the aforementioned two fusion methods may reduce the number of final a plurality of graph slices, significantly reducing the number of subgraph data subsequently generated for training graph neural networks, and reducing the complexity of training graph neural networks.

At step 430: perform, based on the full graph, structural restoration on the graph blocks included in each of the plurality of graph slices, to determine the plurality of subgraph structures.

In some embodiments, the nodes and edges included in the graph blocks in each graph slice may be structurally restored in accordance with the full graph structure to obtain a plurality of subgraph structures. For specific details about the subgraph structure, please refer to the above-mentioned step 210 and its related description, and will not be described again here.

The graph segmenting method of the embodiments of the present disclosure can segment large-scale graph data (for example, a graph including one billion nodes), so that the method for graph neural network generation of the present disclosure can be applied to large-scale graph neural network training, improving the training efficiency of large-scale graph neural networks and overcoming the computational bottleneck of large-scale graph neural networks.

FIG. 5 is a block diagram of an apparatus for graph neural network generating according to an example embodiment. As shown in FIG. 5, the apparatus 500 includes:
a first obtaining module 510 configured to obtain a subgraph structure, the subgraph structure being configured to reflect a graph structure of a corresponding subgraph, and the subgraph comprising a plurality of nodes and edges between the plurality of nodes;
a second obtaining module 520 configured to obtain, based on the subgraph structure and according to a predetermined priority, node features of the plurality of nodes and edge features of the edges from a plurality of memories; the predetermined priority being obtained by sorting the plurality of memories in accordance with memory size in an ascending order;
a fusing module 530 configured to fuse, based on the subgraph structure, the node features of the plurality of nodes and the edge features of the edges to obtain subgraph data;
a training module 540 configured to train, based on the subgraph data, the graph neural network.

In some embodiments, the plurality of memories comprises a graphics processing unit memory, a central processing unit memory and a first graph storage server memory; the second obtaining module 520 is further configured for:
determining first node identifications associated with the graphics processing unit memory from identifications of the plurality of nodes, and obtaining the node features of first nodes and the edge features of edges connected to the first nodes from the graphics processing unit memory according to the first node identifications;
if the first nodes do not include all of the plurality of nodes, determining second node identifications associated with the central processing unit memory from identifications of first remaining nodes, and
obtaining the node features of second nodes and the edge features of edges connected to the second nodes from the central processing unit memory according to the second node identifications; the first remaining nodes being nodes obtained after removing the first nodes from the plurality of the nodes; and
if the first nodes and the second nodes do not include all of the plurality of nodes, obtaining the node features of second remaining nodes and the edge features of edges connected to the second remaining nodes from the first graph storage server memory according to identifications of the second remaining nodes, and the second remaining nodes being nodes obtained after removing the first nodes and the second nodes from the plurality of nodes.

In some embodiments, the plurality of memories comprises a plurality of the graphics processing unit memories; and the second obtaining module 520 is further configured for:
determining the first node identifications associated with respective graphics processing unit memories in the plurality of graphics processing unit memories, and obtaining the node features of corresponding first nodes and the edge features of the edges connected to the first nodes from the respective graphics processing unit memories using a plurality of threads through a thread queue.

In some embodiments, the first obtaining module 510 is further configured for:
obtaining the subgraph structure from a second graph storage server memory based on a sampler; a plurality of subgraph structures being stored in the second graph storage server memory; and
node features and edge features of the subgraph structure being pre-extracted and cached into the plurality of memories.

In some embodiments, the system may further include a graph segmenting module configured for: segmenting a full graph into a plurality of graph blocks according to a breadth-first search algorithm, each of the graph blocks comprising the corresponding number of the nodes and edges connected to the nodes;
allocating the plurality of graph blocks to a plurality of graph slices; and
performing, based on the full graph, structural restoration on the graph blocks included in each of the plurality of graph slices, to determine the plurality of subgraph structures.

In some embodiments, the graph segmenting module is further configured for:
allocating the plurality of graph blocks to the plurality of graph slices in accordance with a predetermined order; and
exchanging information of respective picture slices of the plurality of graph slices, and adjusting the graph blocks having association relationship into a same graph slice, to obtain a plurality of adjusted graph slices.

In some embodiments, the graph segmenting module is further configured for:
fusing a first target graph block having a node number less than a first predetermined threshold with other graph blocks to obtain a plurality of fused graph blocks, the other graph blocks being graph blocks obtained after removing the first target graph block from the plurality of graph blocks.

In some embodiments, the graph segmenting module is further configured for:
determining, from the plurality of graph blocks, a second target graph block having a node number less than a second predetermined threshold, and a third target graph block having a node number greater than a third predetermined threshold; the third predetermined threshold being greater than the second predetermined threshold; and
if the second target graph block and the third target graph block have association relationship with each other, fusing the second target graph block with the third target graph block to obtain a plurality of fused graph blocks.

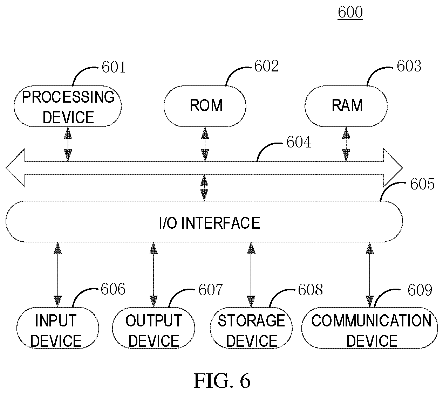

Referring to FIG. 6, which illustrates a schematic structural diagram of an electronic device (e.g., the plurality of model training apparatuses or graph segmenting apparatuses in FIG. 1) 600 suitable for implementing embodiments of the present disclosure. The electronic device shown in FIG. 6 is only an example and should not impose any limitations on the functions and scope of use of the embodiments of the present disclosure.

As shown in FIG. 6, the electronic device 600 may include a processing device (such as a central processing unit and a graphics processor) 601, which may execute various appropriate actions and processing according to a program stored in a read-only memory (ROM) 602 or a program loaded to a random access memory (RAM) 603 from a storage device 608. Various programs and data required during operation of the electronic device 600 are also stored in the RAM 603. The processing device 601, the ROM 602 and the RAM 603 are connected with one another via a bus 604. An input/output (I/O) interface 605 is also connected to the bus 604.

Generally, the following apparatuses may be connected to the I/O interface 605: an input device 606 including for example a touch screen, a touch pad, a keyboard, a mouse, a camera, a microphone, an accelerometer and a gyroscope; an output device 607 including for example a liquid crystal display (LCD), a speaker and a vibrator; a storage device 608 including for example a magnetic tape and a hard disk; and a communication device 609. The communication device 609 may allow wireless or wired communication between the electronic device 600 and other devices for data exchange. Although the figure shows the electronic device 600 having various devices, it should be understood that not all the devices shown are necessarily required to be implemented or provided. More or fewer devices may alternatively be implemented or provided.

In particular, according to the embodiments of the present disclosure, the process described above with reference to the flowcharts may be implemented as a computer software program. For example, an embodiment of the present disclosure provides a computer program product including a computer program carried on a non-transient computer-readable medium. The computer program includes a program code for executing the methods shown in the flowcharts. In such an embodiment, the computer program may be downloaded and installed from the network via the communication device 609, or installed from the storage device 608, or installed from the ROM 602. The computer program, when executed by the processing unit 601, causes the processing unit to execute the above functions defined in the methods according to the embodiments of the present disclosure.

It should be noted that the computer-readable medium according to the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus, or device, or any combination thereof. More specific examples of the computer-readable storage medium include but are not limited to: an electrical connection with at least one wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program. The program may be used by or used in combination with an instruction execution system, apparatus, or device. However, in the present disclosure, the computer-readable signal medium may include a data signal propagated in baseband or as a part of a carrier wave, and computer-readable program code is carried therein. This propagated data signal may take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program used by or used in combination with the instruction execution system, apparatus, or device. The program code contained on the computer-readable medium may be transmitted by any suitable medium, including but not limited to, wire, optical cable, RF, etc., or any suitable combination thereof.

In some implementations, a client and server may communicate using any currently known or future developed network protocol such as HTTP (HyperText Transfer Protocol) and may interconnect with any form or medium of digital data communication (such as communication networks). Examples of communication networks include Local Area Networks (LANs), Wide Area Networks (WANs), the Internet (such as the Internet), and end-to-end networks (such as ad hoc end-to-end networks), as well as any network currently known or future developed.

The above-mentioned computer-readable medium may be included in the above-mentioned electronic device; it may also stand alone without being assembled into the electronic device.

The computer-readable medium carries one or more programs. When the one or more programs are executed by the electronic device, the electronic device is caused to: obtain a subgraph structure, the subgraph structure is configured to reflect a graph structure of a corresponding subgraph, and the subgraph comprises a plurality of nodes and edges between the plurality of nodes;
obtain, based on the subgraph structure and according to a predetermined priority, node features of the plurality of nodes and edge features of the edges from a plurality of memories; the predetermined priority is obtained by sorting the plurality of memories in accordance with memory size in an ascending order; fuse, based on the subgraph structure, the node features of the plurality of nodes and the edge features of the edges to obtain subgraph data; and train, based on the subgraph data, the graph neural network.

The computer program code for performing the operations of the present disclosure may be written in one or more programming languages or a combination thereof, which include but are not limited to object-oriented programming languages Java, Smalltalk, C++, and conventional procedural programming languages such as "C" or similar programming languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and the block diagrams in the drawings illustrate system architectures, functions and operations that may be implemented based on the system, method, and computer program product according to various embodiments of the present disclosure. In this regard, each block in the flowcharts or the block diagrams can represent one module, a program segment or a part of a code, and the module, the program segment or the part of the code includes at least one executable instruction for implementing specific logic functions. It should also be noted that, in some alternative implementations, the functions noted in the blocks may also occur in a sequence different from those illustrated in the drawings. For example, two consecutive blocks may be executed substantially in parallel, and may sometimes be executed in an opposite order, depending on the functions involved. It should also be noted that each block in the block diagrams and/or the flowcharts, and combinations of the blocks in the block diagrams and/or the flowcharts can be implemented in a dedicated hardware-based system that performs the specified functions or operations, or can be implemented by the combination of dedicated hardware and computer instructions.

The modules involved in the embodiments described in this disclosure can be implemented in software or hardware. Herein, the name of the module does not constitute a limitation on the module itself in some cases. For example, the first obtaining module may also be described as a "module of obtaining subgraph structure".

The functions described above herein may be at least partially performed by one or more hardware logic components. For example, non-restrictively, example types of hardware logic components that may be used include: a field programmable gate array (FPGA), an application-specific integrated circuit (ASIC), an application-specific standard parts (ASSP), a system-on-chip (SOC), a complex programmable logic device (CPLD), and the like.

In the context of the present disclosure, the machine-readable medium may be a tangible medium that may contain or store a program used by or used in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

According to one or more embodiments of the present disclosure, Example 1 provides a method for graph neural network generation, which includes:
obtaining a subgraph structure, the subgraph structure being configured to reflect a graph structure of a corresponding subgraph, and the subgraph comprising a plurality of nodes and edges between the plurality of nodes;
obtaining, based on the subgraph structure and according to a predetermined priority, node features of the plurality of nodes and edge features of the edges from a plurality of memories; the predetermined priority being obtained by sorting the plurality of memories in accordance with memory size in an ascending order;
fusing, based on the subgraph structure, the node features of the plurality of nodes and the edge features of the edges to obtain subgraph data; and
training, based on the subgraph data, the graph neural network.

According to one or more embodiments of the present disclosure, Example 2 provides the method of Example 1. The plurality of memories comprises a graphics processing unit memory, a central processing unit memory and a first graph storage server memory; and obtaining, based on the subgraph structure and according to the predetermined priority, the node features of the plurality of nodes and the edge features of the edges from the plurality of memories includes:
determining first node identifications associated with the graphics processing unit memory from identifications of the plurality of nodes, and obtaining the node features of first nodes and the edge features of edges connected to the first nodes from the graphics processing unit memory according to the first node identifications;

if the first nodes do not include all of the plurality of nodes, determining second node identifications associated with the central processing unit memory from identifications of first remaining nodes, and obtaining the node features of second nodes and the edge features of edges connected to the second nodes from the central processing unit memory according to the second node identifications; the first remaining nodes being nodes obtained after removing the first nodes from the plurality of the nodes; and

if the first nodes and the second nodes do not include all of the plurality of nodes, obtaining the node features of second remaining nodes and the edge features of edges connected to the second remaining nodes from the first graph storage server memory according to identifications of the second remaining nodes, and the second remaining nodes being nodes obtained after removing the first nodes and the second nodes from the plurality of nodes.

According to one or more embodiments of the present disclosure, Example 3 provides the method of Example 2, the plurality of memories comprises a plurality of the graphics processing unit memories; and obtaining the node features of the first nodes and the edge features of the edges connected to the first nodes from the graphics processing unit memory according to the first node identifications includes:
determining the first node identifications associated with respective graphics processing unit memories in the plurality of graphics processing unit memories, and obtaining the node features of corresponding first nodes and the edge features of the edges connected to the first nodes from the respective graphics processing unit memories using a plurality of threads through a thread queue.

According to one or more embodiments of the present disclosure, Example 4 provides the method of Example 1, and the obtaining the subgraph structure includes:
obtaining the subgraph structure from a second graph storage server memory based on a sampler; a plurality of subgraph structures being stored in the second graph storage server memory; and
node features and edge features of the subgraph structure being pre-extracted and cached into the plurality of memories.

According to one or more embodiments of the present disclosure, Example 5 provides the method of Example 4, and the plurality of subgraph structures are obtained in the following manner:
segmenting a full graph into a plurality of graph blocks according to a breadth-first search algorithm, each of the graph blocks comprising the corresponding number of the nodes and edges connected to the nodes;
allocating the plurality of graph blocks to a plurality of graph slices; and
performing, based on the full graph, structural restoration on the graph blocks included in each of the plurality of graph slices, to determine the plurality of subgraph structures.

According to one or more embodiments of the present disclosure, Example 6 provides the method of Example 5, wherein allocating the plurality of graph blocks to the plurality of graph slices includes:
allocating the plurality of graph blocks to the plurality of graph slices in accordance with a predetermined order; and
exchanging information of respective picture slices of the plurality of graph slices, and adjusting the graph blocks having association relationship into a same graph slice, to obtain a plurality of adjusted graph slices.

According to one or more embodiments of the present disclosure, Example 7 provides the method of Example 5. Before allocating the plurality of graph blocks to the plurality of graph slices, the method further includes:
fusing a first target graph block having a node number less than a first predetermined threshold with other graph blocks to obtain a plurality of fused graph blocks, the other graph blocks being graph blocks obtained after removing the first target graph block from the plurality of graph blocks.

According to one or more embodiments of the present disclosure, Example 8 provides the method of Example 5. Before allocating the plurality of graph blocks to the plurality of graph slices, the method further includes:

determining, from the plurality of graph blocks, a second target graph block having a node number less than a second predetermined threshold, and a third target graph block having a node number greater than a third predetermined threshold; the third predetermined threshold being greater than the second predetermined threshold; and

if the second target graph block and the third target graph block have association relationship with each other, fusing the second target graph block with the third target graph block to obtain a plurality of fused graph blocks.

According to one or more embodiments of the present disclosure, Example 9 provides an apparatus for graph neural network generation, which includes:
a first obtaining module configured to obtain a subgraph structure, the subgraph structure being configured to reflect a graph structure of a corresponding subgraph, and the subgraph comprising a plurality of nodes and edges between the plurality of nodes;
a second obtaining module configured to obtain, based on the subgraph structure and according to a predetermined priority, node features of the plurality of nodes and edge features of the edges from a plurality of memories; the predetermined priority being obtained by sorting the plurality of memories in accordance with memory size in an ascending order;
a fusing module configured to fuse, based on the subgraph structure, the node features of the plurality of nodes and the edge features of the edges to obtain subgraph data; and
a training module configured to train, based on the subgraph data, the graph neural network.

According to one or more embodiments of the present disclosure, Example 10 provides the apparatus of Example 9, the plurality of memories comprises a graphics processing unit memory, a central processing unit memory and a first graph storage server memory; and the second obtaining module is further configured for:
determining first node identifications associated with the graphics processing unit memory from identifications of the plurality of nodes, and obtaining the node features of first nodes and the edge features of edges connected to the first nodes from the graphics processing unit memory according to the first node identifications;
if the first nodes do not include all of the plurality of nodes, determining second node identifications associated with the central processing unit memory from identifications of first remaining nodes, and
obtaining the node features of second nodes and the edge features of edges connected to the second nodes from the central processing unit memory according to the second node identifications; the first remaining nodes being nodes obtained after removing the first nodes from the plurality of the nodes; and
if the first nodes and the second nodes do not include all of the plurality of nodes, obtaining the node features of second remaining nodes and the edge features of edges connected to the second remaining nodes from the first graph storage server memory according to identifications of the second remaining nodes, and the second remaining nodes being nodes obtained after removing the first nodes and the second nodes from the plurality of nodes.

According to one or more embodiments of the present disclosure, Example 11 provides the apparatus of Example 10, the plurality of memories comprises a plurality of the graphics processing unit memories; the second obtaining module is further configured for:
determining the first node identifications associated with respective graphics processing unit memories in the plurality of graphics processing unit memories, and obtaining the node features of corresponding first nodes and the edge features of the edges connected to the first nodes from the respective graphics processing unit memories using a plurality of threads through a thread queue.

According to one or more embodiments of the present disclosure, Example 12 provides the apparatus of Example 9, the first obtaining module is further configured to:
obtaining the subgraph structure from a second graph storage server memory based on a sampler; a plurality of subgraph structures being stored in the second graph storage server memory; and
node features and edge features of the subgraph structure being pre-extracted and cached into the plurality of memories.

According to one or more embodiments of the present disclosure, Example 13 provides the apparatus of Example 12, and the system may further include a graph segmenting module configured for:
segmenting a full graph into a plurality of graph blocks according to a breadth-first search algorithm, each of the graph blocks comprising the corresponding number of the nodes and edges connected to the nodes;
allocating the plurality of graph blocks to a plurality of graph slices; and
performing, based on the full graph, structural restoration on the graph blocks included in each of the plurality of graph slices, to determine the plurality of subgraph structures.

According to one or more embodiments of the present disclosure, Example 14 provides the apparatus of Example 13, and the graph segmenting module is further configured for:
allocating the plurality of graph blocks to the plurality of graph slices in accordance with a predetermined order; and
exchanging information of respective picture slices of the plurality of graph slices, and adjusting the graph blocks having association relationship into a same graph slice, to obtain a plurality of adjusted graph slices.

According to one or more embodiments of the present disclosure, Example 15 provides the apparatus of Example 13, and the graph segmenting module is further configured for:
fusing a first target graph block having a node number less than a first predetermined threshold with other graph blocks to obtain a plurality of fused graph blocks, the other graph blocks being graph blocks obtained after removing the first target graph block from the plurality of graph blocks.

According to one or more embodiments of the present disclosure, Example 16 provides the apparatus of Example 13, and the graph segmenting module is further configured for:
determining, from the plurality of graph blocks, a second target graph block having a node number less than a second predetermined threshold, and a third target graph block having a node number greater than a third predetermined threshold; the third predetermined threshold being greater than the second predetermined threshold; and
if the second target graph block and the third target graph block have association relationship with each other, fusing the second target graph block with the third target graph block to obtain a plurality of fused graph blocks.

According to one or more embodiments of the present disclosure, Example 17 provides a system for graph neural network generation, the system includes: a graph segmenting apparatus and a plurality of model training apparatuses, the graph segmenting apparatus is configured to perform steps of a method according to any of Examples 5-8 to obtain a plurality of subgraph structures and load the plurality of the subgraph structures into the second graph storage server memory; each of the plurality of model training apparatuses is configured to perform steps of the method according to any of Examples 1-4 to train the graph neural network.

According to one or more embodiments of the present disclosure, Example 18 provides a computer-readable medium having stored thereon a computer program that, when executed by a processing device, the program performs steps of the method according to any of Examples 1-8.

According to one or more embodiments of the present disclosure, Example 19 provides an electronic device, including:
a storage device having stored thereon one or more computer programs; and
one or more processing devices configured to execute the one or more computer programs in the storage device to implement steps of a method according to any of Examples 1-8.

The above description is only for the preferred embodiments of the present disclosure and an explanation of the technical principles used. Those skilled in the art should understand that the scope involved in the present disclosure is not limited to technical solutions formed by specific combinations of the aforementioned technical features, and should also cover other technical solutions formed by any combinations of the aforementioned technical features or their equivalent features without departing from the disclosed concept. For example, a technical solution is formed by replacing the above features with (but not limited to) technical features with similar functions disclosed in this disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of this disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims. Regarding the system in the above embodiments, the specific way in which each module performs operations has been described in detail in the embodiments related to this method, and will not be elaborated here.

## Claims

1. A method for generating a graph neural network, comprising:
obtaining a subgraph structure, the subgraph structure being configured to reflect a graph structure of a corresponding subgraph, and the subgraph comprising a plurality of nodes and edges between the plurality of nodes;
obtaining, based on the subgraph structure and according to a predetermined priority, node features of the plurality of nodes and edge features of the edges from a plurality of memories; the predetermined priority being obtained by sorting the plurality of memories in accordance with memory size in an ascending order;
fusing, based on the subgraph structure, the node features of the plurality of nodes and the edge features of the edges to obtain subgraph data; and
training, based on the subgraph data, the graph neural network.

2. The method for generating a graph neural network of claim 1, wherein the plurality of memories comprises a graphics processing unit memory, a central processing unit memory and a first graph storage server memory; and obtaining, based on the subgraph structure and according to the predetermined priority, the node features of the plurality of nodes and the edge features of the edges from the plurality of memories comprises:
determining first node identifications associated with the graphics processing unit memory from identifications of the plurality of nodes, and obtaining the node features of first nodes and the edge features of edges connected to the first nodes from the graphics processing unit memory according to the first node identifications;
if the first nodes do not include all of the plurality of nodes, determining second node identifications associated with the central processing unit memory from identifications of first remaining nodes, and obtaining the node features of second nodes and the edge features of edges connected to the second nodes from the central processing unit memory according to the second node identifications; the first remaining nodes being nodes obtained after removing the first nodes from the plurality of the nodes; and
if the first nodes and the second nodes do not include all of the plurality of nodes, obtaining the node features of second remaining nodes and the edge features of edges connected to the second remaining nodes from the first graph storage server memory according to identifications of the second remaining nodes, and the second remaining nodes being nodes obtained after removing the first nodes and the second nodes from the plurality of nodes.

3. The method for generating a graph neural network of claim 2, wherein the plurality of memories comprises a plurality of the graphics processing unit memories; and obtaining the node features of the first nodes and the edge features of the edges connected to the first nodes from the graphics processing unit memory according to the first node identifications comprises:
determining the first node identifications associated with respective graphics processing unit memories in the plurality of graphics processing unit memories, and obtaining the node features of corresponding first nodes and the edge features of the edges connected to the first nodes from the respective graphics processing unit memories using a plurality of threads through a thread queue.

4. The method for generating a graph neural network of claim 1, wherein obtaining the subgraph structure comprises:
obtaining the subgraph structure from a second graph storage server memory based on a sampler; a plurality of subgraph structures being stored in the second graph storage server memory; and
node features and edge features of the subgraph structure being pre-extracted and cached into the plurality of memories.

5. The method for generating a graph neural network of claim 4, wherein the plurality of subgraph structures are obtained through the following manners:
segmenting a full graph into a plurality of graph blocks according to a breadth-first search algorithm, each of the graph blocks comprising the corresponding number of the nodes and edges connected to the nodes;
allocating the plurality of graph blocks to a plurality of graph slices; and
performing, based on the full graph, structural restoration on the graph blocks included in each of the plurality of graph slices, to determine the plurality of subgraph structures.

6. The method for generating a graph neural network of claim 5, wherein allocating the plurality of graph blocks to the plurality of graph slices comprises:
allocating the plurality of graph blocks to the plurality of graph slices in accordance with a predetermined order; and
exchanging information of respective picture slices of the plurality of graph slices, and adjusting the graph blocks having association relationship into a same graph slice, to obtain a plurality of adjusted graph slices.

7. The method for generating a graph neural network of claim 5, wherein before allocating the plurality of graph blocks to the plurality of graph slices, the method further comprises:
fusing a first target graph block having a node number less than a first predetermined threshold with other graph blocks to obtain a plurality of fused graph blocks, the other graph blocks being graph blocks obtained after removing the first target graph block from the plurality of graph blocks.

8. The method for generating a graph neural network of claim 5, wherein before allocating the plurality of graph blocks to the plurality of graph slices, the method further comprises:
determining, from the plurality of graph blocks, a second target graph block having a node number less than a second predetermined threshold, and a third target graph block having a node number greater than a third predetermined threshold; the third predetermined threshold being greater than the second predetermined threshold; and
if the second target graph block and the third target graph block have association relationship with each other, fusing the second target graph block with the third target graph block to obtain a plurality of fused graph blocks.

9. An apparatus for generating a graph neural network, comprising:
a first obtaining module configured to obtain a subgraph structure, the subgraph structure being configured to reflect a graph structure of a corresponding subgraph, and the subgraph comprising a plurality of nodes and edges between the plurality of nodes;
a second obtaining module configured to obtain, based on the subgraph structure and according to a predetermined priority, node features of the plurality of nodes and edge features of the edges from a plurality of memories; the predetermined priority being obtained by sorting the plurality of memories in accordance with memory size in an ascending order;
a fusing module configured to fuse, based on the subgraph structure, the node features of the plurality of nodes and the edge features of the edges to obtain subgraph data; and
a training module configured to train, based on the subgraph data, the graph neural network.

10. A system for generating a graph neural network, wherein the system comprises: a graph segmenting apparatus and a plurality of model training apparatuses, the graph segmenting apparatus is configured to perform steps of a method according to any of claims 5-8 to obtain a plurality of subgraph structures and load the plurality of the subgraph structures into the second graph storage server memory; each of the plurality of model training apparatuses is configured to perform steps of a method according to any of claims 1-4 to train the graph neural network.

11. A computer readable medium having stored thereon a computer program that, when executed by a processing device, the program performs steps of a method according to any of claims 1-8.

12. An electronic device, comprising:
a storage device having stored thereon one or more computer programs; and
one or more processing devices configured to execute the one or more computer programs in the storage device to implement steps of a method according to any of claims 1-8.
